# DEMANDE DE BREVET EUROPEEN

(11) **EP 0 610 121 A1**
(43) Date de publication de la demande: **10.08.1994**
(21) Numéro de dépôt: 94400192.4
(22) Date de dépôt: 28.01.1994
(51) Int. Cl.: C12C 1/06

(54) **Procédé de touraillage du malt**

(30) Priorité: 01.02.1993 FR 9301036
(71) Demandeur: NORDON & CIE, F-54001 Nancy Cèdex (FR)
(72) Inventeur: Sauvage, René, F-54690 Eulmont (FR); Schaaf, Gérard, F-54770 Laitre S/Amance (FR); Flament, Guy, F-54290 Bayon (FR)
(74) Mandataire: Picard, Jean-Claude Georges

(57) **Abrégé**

Procédé de touraillage du malt, comprenant une touraille à plateaux superposés pourvue de moyens d'amenée et d'étalement d'une charge de malt sur chaque plateau, de moyens de déchargement du malt par couches successives et de moyens de ventilation d'air chaud selon un courant traversant ladite charge.

Ce procédé se caractérise en ce qu'il consiste à déverser la totalité de ladite charge C sur au moins un plateau supérieur, à provoquer le séchage de cette charge sur seulement une partie e de sa hauteur, à évacuer la partie séchée C1 du malt au bout d'une durée de séchage déterminée en laissant la partie restante non séchée C2 sur ce plateau supérieur, à décharger ladite partie séchée C1 sur un plateau inférieur, et à provoquer le touraillage de cette partie séchée C1 sur ce plateau inférieur tandis que, sur ledit plateau supérieur, se poursuit en même temps le séchage de ladite partie restante C2 de ladite charge.

## Description

La présente invention concerne un procédé de touraillage du malt, comprenant une touraille à plateaux superposés pourvue de moyens d'amenée et d'étalement d'une charge de malt sur chaque plateau, de moyens de déchargement du malt par couches successives et de moyens de ventilation d'air chaud selon un courant traversant ladite charge.

A l'origine, les tourailles à double plateau mettaient en oeuvre un basculement des couches pour passer de l'opération de séchage à l'opération de touraillage. Par suite, l'air de séchage devait traverser à deux reprises toute l'épaisseur de la charge de malt, ce qui entraînait une importante consommation d'énergie pour l'alimentation des ventilateurs, la perte de charge étant élevée.

Ce type d'inconvénient se retrouve aussi dans les tourailles à flux croisés, fonctionnant sur la base d'un cycle de 48 h avec chargement toutes les 24 heures.

Selon un procédé plus récent, on a cherché à valoriser le croisement des flux en remplissant à des hauteurs différentes au moins trois plateaux, les chargements et déchargements étant plus étalés dans le temps. Ce procédé, par rapport au procédé à double plateau, permet de diminuer la puissance électrique des ventilateurs, et aussi une construction simplifiée. Cependant, le fait de sécher et tourailler en couches d'épaisseurs différentes nécessite un remélange ultérieur afin d'obtenir un produit homogène. Cela nécessite en outre trois outils de chargement et déchargement ou un plancher rotatif, mais surtout le rendement énergétique calculé nécessite un respect absolu des temps alloués, de sorte que l'on retrouve partiellement les contraintes de la touraille continue.

Le but de la présente invention est de remédier à ces inconvénients des techniques antérieures, et d'obtenir une importante économie d'énergie sans compliquer beaucoup l'installation.

A cet effet, un procédé de touraillage du malt conforme à l'invention, du type général défini au début, est caractérisé en ce qu'il consiste à déverser la totalité de ladite charge sur au moins un plateau supérieur, à provoquer le séchage de cette charge sur seulement une partie de sa hauteur, à évacuer la partie séchée du malt au bout d'une durée de séchage déterminée, à décharger ladite partie séchée sur un plateau inférieur, et à provoquer le touraillage de cette partie séchée sur ce plateau inférieur tandis que, sur ledit plateau supérieur, se poursuit en même temps le séchage de ladite partie restante de ladite charge.

Ainsi on divise dans une certaine proportion, à chaque opération, la perte de charge des ventilateurs à travers le grain, et l'on réalise une importante économie d'énergie. Si l'on n'utilise par exemple que deux plateaux, on n'effectue dans un premier temps le séchage du grain que sur la moitié de la hauteur qu'il occupe sur le premier plateau, on évacue cette demi-charge sur le plateau inférieur pour son touraillage, et la perte de charge subie par l'air de ventilation est alors divisée par deux. A charge au m2 équivalente, l'installation ne nécessitera dans cette hypothèse que deux appareils de chargement et de déchargement, d'où une complication minime.

Compte tenu des dispositions qui précèdent, on comprend que la fin du séchage de la charge restante sur le plateau supérieur pourra intervenir en même temps que la fin du touraillage sur le plateau inférieur, pour une durée de séchage de 10 à 12 h sur le plateau supérieur et approximativement une même durée de touraillage sur le plateau inférieur.Il n'y a donc aucune perte de temps entre les différentes opérations du processus.

On obtiendra par ailleurs une homogénéité maximale du malt par remélangeage entre le séchage et le touraillage.

Selon une variante, on peut utiliser deux plateaux supérieurs au lieu d'un, ceci toujours pour un plateau inférieur servant au touraillage.

Dans ce cas le procédé pourra donc se caractériser en ce qu'il consiste à déverser la totalité de ladite charge sur au moins deux plateaux supérieurs, approximativement à équirépartition, à provoquer le séchage de cette charge sur seulement une partie de sa hauteur, sur chacun de ces plateaux, à évacuer la partie séchée du malt au bout d'une durée de séchage déterminée en laissant la partie restante non séchée sur lesdits plateaux supérieurs, à décharger ladite partie séchée de chacun de ces plateaux sur un plateau inférieur, et à provoquer le touraillage de cette partie séchée sur ce plateau inférieur tandis que, sur lesdits plateaux supérieurs, se poursuit en même temps le séchage de ladite partie restante de ladite charge.

En d'autres termes, le plateau supérieur de la première variante a été divisé en deux, mais le principe général de l'invention est bien entendu le même : le touraillage d'une partie de charge préalablement séchée s'effectue en même temps que le séchage de la partie restante de la charge, avec à chaque fois une division par deux de la hauteur de la couche de malt en cours de séchage, et donc de la perte de charge que subit l'air en le traversant.

On conçoit donc que l'économie d'énergie que l'invention permet de réaliser provient du fait que dans toutes les installations connues on faisait traverser inutilement à l'air de séchage une certaine épaisseur de grain déjà séché, à partir d'une certaine durée de séchage, ce que l'invention permet d'éviter, puisqu'une partie de la charge, par exemple la moitié, est touraillée dès que son séchage est terminé.

Par extrapolation des principes susdéfinis, on pourrait également prévoir, conformément à une autre variante de l'invention, un touraillage pratiquement continu, en utilisant un plus grand nombre de plateaux de séchage, et en évacuant de chacun d'eux, vers un plateau de touraillage, les petites couches successives de malt, séchées en même temps sur chacun de ces plateaux de séchage.

Il est à noter que le plateau de touraillage pourra être proportionnellement plus petit que les plateaux normalement utilisés, à charge totale de grain identique.

Ainsi, par exemple, en cas d'utilisation d'un plateau supérieur de séchage de dimensions normales et d'un plateau inférieur de touraillage, ce dernier pourra avoir une capacité de 40 à 60% inférieure à celle d'un plateau normal, puisqu'il ne fera le touraillage de la charge de malt que moitié par moitié.

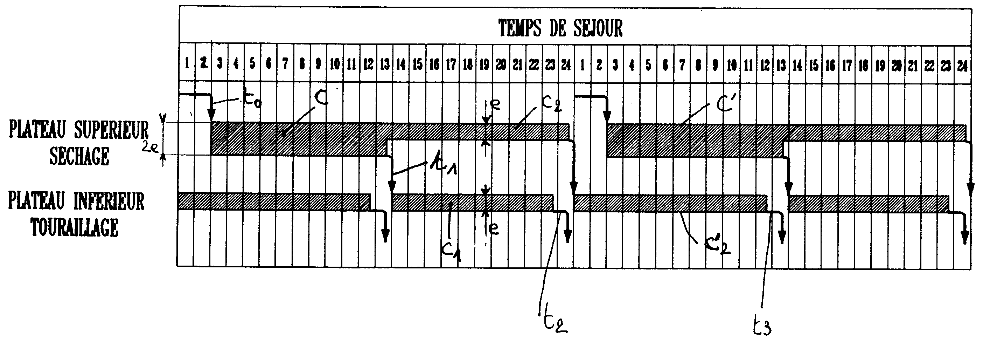

A la figure unique du dessin ci-annexé, on a représenté un diagramme schématisant le fonctionnement du procédé dans le cas où l'on utilise un seul plateau supérieur de séchage, et un plateau inférieur de touraillage (il serait facile d'extrapoler ce diagramme au cas d'un nombre de plateaux de séchage égal ou supérieur à 2).

Sur cette figure, le temps de séjour est indiqué horizontalement en heures. Sur le plateau supérieur de séchage, on voit que l'on sèche pendant environ 11 h, à partir du temps to, une couche C de malt d'épaisseur 2e. Au temps t1, la couche inférieure sèche C1 d'épaisseur e est envoyée sur le plateau inférieur de touraillage, et le touraillage s'effectue pendant une dizaine d'heures, du temps t1 au temps t2, temps pendant lequel se poursuit le séchage de la couche de malt restante C2, d'épaisseur e, dans le plateau supérieur. Approximativement au temps t2, la couche sèche C2 passe à son tour sur le plateau de touraillage, en C'2, et une nouvelle charge C', d'épaisseur 2e, est introduite sur le plateau supérieur. Le processus séchage-touraillage se répète alors comme précédemment. On voit qu'au temps t3, c'est-à-dire une douzaine d'heures après t2, la totalité de la charge C a été séchée et touraillée, mais à chaque fois sur une demi-épaisseur de la couche initiale. La durée totale de séjour de la moitié supérieure de la charge C dans la touraille aura donc été d'environ 34 heures, et la durée de séjour de la moitié inférieure d'environ 21 h, ce qui correspond à une augmentation moyenne ou globale du temps de séjour assez faible par rapport à celle qui est nécessaire selon les procédés de touraillage classiques.

Sur le diagramme, on remarque que c'est la moitié inférieure de la couche C (ou C') qui est prélevée du plateau de séchage pour être touraillée ; cela suppose un courant d'air de séchage ascendant. Il va de soi que l'invention pourrait être mise en oeuvre d'une façon tout à fait similaire avec un courant d'air de séchage descendant. C'est alors la moitié supérieure de la couche C qui serait prélevée pour être touraillée.

Ce procédé, en ses différentes versions, permet d'obtenir la qualité de malt homogène que l'on connaissait quand autrefois les malts étaient transférés. De plus, sa souplesse d'emploi rend le processus très facilement modulable en fonction de la tarification électrique. A titre d'exemple, pour un marché favorisant l'économie d'énergie et ayant des tarifications différentes selon la journée, on pourrait envisager des temps de séchage en couche épaisse lorsque le courant est moins cher et utiliser la couche réduite lorsque la tarification est supérieure.

## Revendications

1. Procédé de touraillage du malt, comprenant une touraille à plateaux superposés pourvue de moyens d'amenée et d'étalement d'une charge de malt sur chaque plateau, de moyens de déchargement du malt par couches successives et de moyens de ventilation d'air chaud selon un courant traversant ladite charge, caractérisé en ce qu'il consiste à déverser la totalité de ladite charge (C) sur au moins un plateau supérieur, à provoquer le séchage de cette charge sur seulement une partie (e) de sa hauteur, à évacuer la partie séchée (C1) du malt au bout d'une durée de séchage déterminée en laissant la partie restante non séchée (C2) sur ce plateau supérieur, à décharger ladite partie séchée (C1) sur un plateau inférieur, et à provoquer le touraillage de cette partie séchée (C1) sur ce plateau inférieur tandis que, sur ledit plateau supérieur, se poursuit en même temps le séchage de ladite partie restante (C2) de ladite charge.

2. Procédé selon la revendication 1, caractérisé en ce qu'il consiste à déverser la totalité de ladite charge (C) sur un plateau supérieur, à provoquer le séchage de cette charge sur seulement une moitié (e) de sa hauteur, à évacuer la partie séchée (C1) du malt au bout d'une durée de séchage déterminée en laissant la moitié restante non séchée (C2) sur ce plateau supérieur, à décharger ladite partie séchée (C1) sur un plateau inférieur, et à provoquer le touraillage de cette partie séchée (C1) sur ce plateau inférieur tandis que, sur ledit plateau supérieur, se poursuit en même temps le séchage de ladite moitié restante (C2) de ladite charge.

3. Procédé selon la revendication 1, caractérisé en ce qu'il consiste à déverser la totalité de ladite charge sur au moins deux plateaux supérieurs, approximativement à équirépartition, à provoquer le séchage de cette charge sur seulement une partie de sa hauteur sur chacun de ces plateaux, à évacuer la partie séchée du malt au bout d'une durée de séchage déterminée en laissant la partie restante non séchée sur lesdits plateaux supérieurs, à décharger ladite partie séchée de chacun de ces plateaux sur un plateau inférieur, et à provoquer le touraillage de cette partie séchée sur ce plateau inférieur tandis que, sur lesdits plateaux supérieurs, se poursuit en même temps le séchage de ladite partie restante de ladite charge.
